# FASCICULE DE BREVET EUROPEEN

(11) **EP 0 580 222 B1**
(45) Date de publication et mention de la délivrance du brevet: **27.11.1996**
(21) Numéro de dépôt: 93202063.9
(22) Date de dépôt: 13.07.1993
(51) Int. Cl.: F16L 47/00

(54) **Raccord de dérivation pour tuyauterie en matière thermoplastique**
Abzweigverbindung für eine thermoplastische Rohrleitung
Branch coupling for a thermoplastic pipeline

(30) Priorité: 24.07.1992 BE 9200676
(43) Date de publication de la demande: 26.01.1994
(73) Titulaire: POLVA PIPELIFE B.V., 1600 AJ Enkhuizen (NL)
(72) Inventeur: Guitoneau, Hans, NL-1613 DH Grootebroek (NL)
(74) Mandataire: de Bruijn, Leendert C.

(56) Documents cités:
- EP-A- 0 393 560
- DE-A- 2 652 518
- DE-U- 8 806 712
- FR-A- 1 581 977
- GB-A- 1 442 306

## Description

L'invention concerne un raccord de dérivation pour tuyauterie en matière thermoplastique permettant d'éviter toute perte ou échappement non désiré du fluide véhiculé lors de sa pose et de sa mise en service sur ladite tuyauterie.

Dans les brevets belges BE-A-833,318 et BE-A-833,431, la demanderesse a déjà proposé des raccords de dérivation pour tuyauteries en matière thermoplastique comportant un élément en forme de selle équipé de moyens permettant sa fixation autour de la tuyauterie à dériver et d'un élement tubulaire de raccordement en T dont une extrémité d'une branche est raccordée à l'élément en forme de selle et dont l'extrémité opposée est équipée d'un moyen d'obturation étanche et amovible, l'extrémité de la branche latérale étant pourvue de moyens permettant son raccordement à une canalisation de dérivation.

Lors de sa mise en service, un tel raccord est placé autour de la tuyauterie et raccordé à la canalisation de dérivation puis, après dépose du moyen d'obturation, on procède au perçage de la tuyauterie en introduisant un outil de perçage approprié dans l'élément tubulaire de raccordement et, après perçage et extraction de l'outil de perçage, on remet en place le moyen d'obturation.

Lors de cette mise en service, il apparaît, dès lors, que le fluide véhiculé par la tuyauterie peut s'échapper vers l'atmosphère entre le moment du perçage de la tuyauterie et le moment de la remise en place du moyen d'obturation.

Il est donc souhaitable d'équiper un tel raccord de moyens permettant d'éliminer tout échappement de fluide en particulier lorsque le fluide véhiculé par la tuyauterie se révèle délétère ou dangereux.

A cet effet, on a déjà proposé dans le brevet Etats-Unis US-A-3,240,227 d'équiper un raccord du type sus-mentionné d'une soupape du type à charnière thermoplastique la base de la branche de l'élément tubulaire pourvu d'un moyen d'obturation.

Il a toutefois été constaté que le système d'étanchéité faisant l'objet de ce brevet présente néanmoins certains inconvénients.

Ainsi, dans la réalisation proposée, la soupape est placée dans un évidement situé dans la partie de plus faible diamètre d'un espace conique de l'élément tubulaire. Il en résulte que, lors de l'introduction et du travail de l'outil de fraisage, la soupape risque d'être extraite de son logement avec pour conséquence une perte de l'étanchéité recherchée.

En outre, durant le travail de perçage, la soupape est maintenue ouverte avec pour conséquence un passage du fluide dans la partie de l'élément tubulaire situé au-dessus de la soupape.

Enfin, la réalisation proposée impose que l'espace conique sus-mentionné soit relativement important pour permettre le placement de la soupape ce qui peut poser certains problèmes de conception notamment lors de la réalisation de raccords destinés à être mis en service sur des tuyauteries de faible diamètre.

La demanderesse a maintenant mis au point un nouveau type de raccord de dérivation qui ne présente plus ces inconvénients et qui est, par ailleurs, illustré par les figures des dessins annexés dans lesquelles :

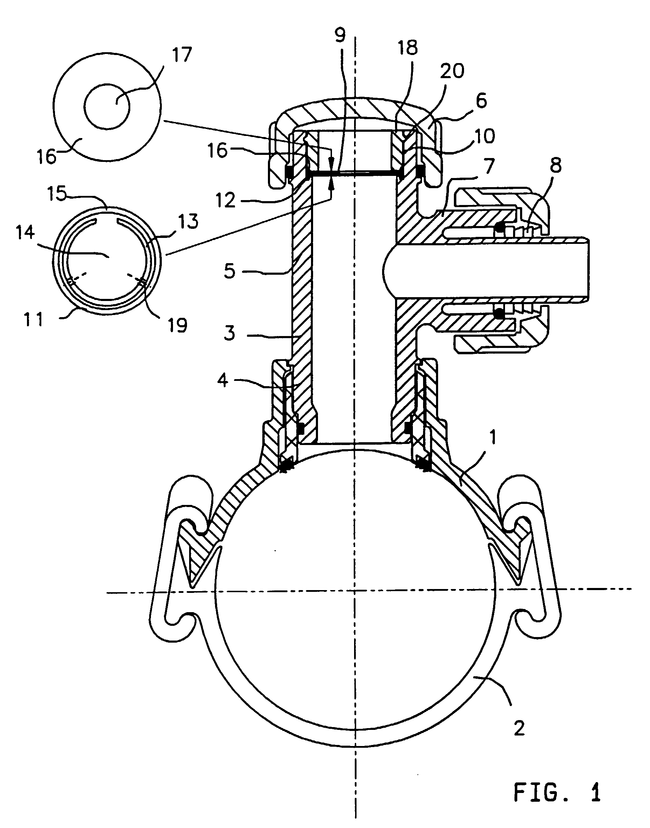

- la fig. 1 est une vue en coupe d'un mode de réalisation du raccord de dérivation conforme à l'invention;

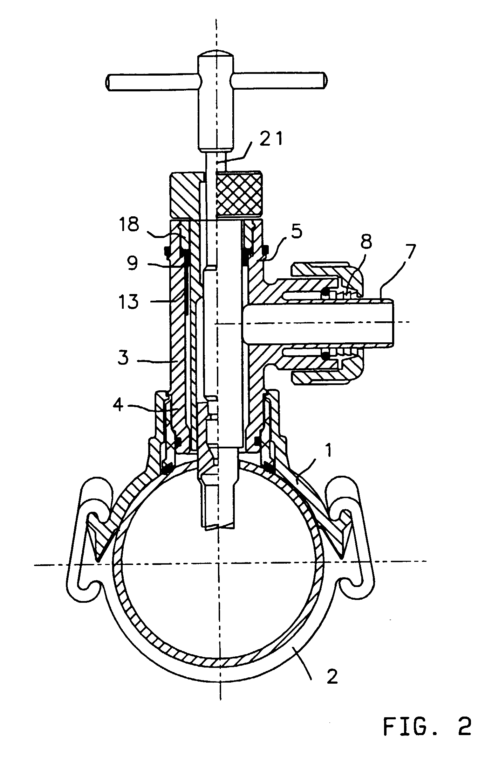

- la fig. 2 est une vue en coupe du raccord selon la fig. 1 montrant l'opération de fraisage de la tuyauterie à dériver;

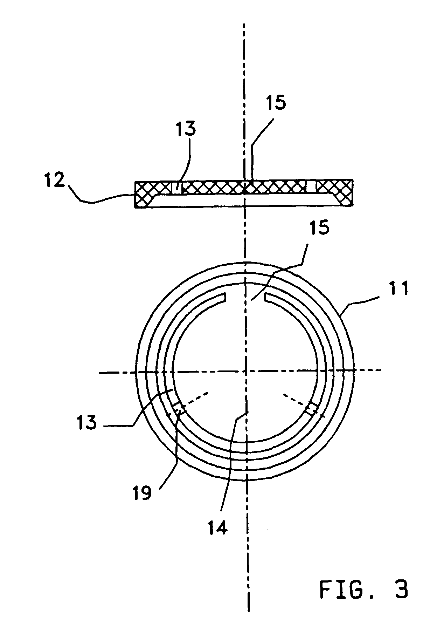

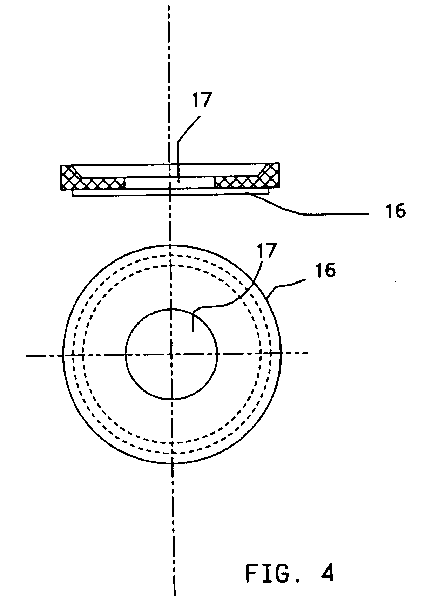

- les fig. 3 et 4 sont des vues en coupe des éléments constituant le système d'étanchéité.

La présente invention concerne, dès lors, un raccord de dérivation pour tuyauterie en matière thermoplastique comportant :
a) un élément en forme de selle (1) équipé de moyens (2) permettant sa fixation autour de la tuyauterie; et
b) un élément tubulaire de raccordement en T (3) dont une extrémité (4) d'une branche est raccordée à l'élément en forme de selle (1) et dont l'extémité opposée (5) est pourvue d'un moyen d'obturation étanche et amovible (6), l'extrémité de la branche latérale (7) de l'élément tubulaire étant pourvue de moyens (8) permettant son raccordement à une canalisation de dérivation,
dans lequel la branche de l'élément tubulaire (5) pourvue d'un moyen d'obturation étanche amovible (6) est équipée d'un système d'étanchéité (9) empêchant toute fuite du fluide véhiculé par la tuyauterie lors de mise en service du raccord par perçage de ladite tuyauterie et dans lequel le système d'étanchéité (9) est incorporé dans un logement ouvert (10) prévu dans la paroi interne de l'extrémité de ladite branche et est constitué par :
- une valve circulaire souple (11) en un matériau élastomère dont le bord épaissi (12) est disposé dans ledit logement ouvert (10), ladite valve présentant une découpe circulaire partielle (13) le long de la majeure partie de sa périphérie, de façon à présenter une partie centrale circulaire (14) raccordée à la périphérie par un élément de liaison (15) agissant comme une charnière;
- un anneau d'étanchéité souple (16) appliqué sur la valve circulaire (11) ledit anneau étant également en un matériau élastomère, étant constitué par un disque circulaire présentant également un bord renforcé qui est disposé dans ledit logement ouvert (10) et comportant une ouverture circulaire centrale (17) de diamètre inférieur à celui de l'outil utilisé pour percer la tuyauterie; et
- une douille de fixation (18) pouvant être insérée et fixée dans ledit logement ouvert (10) pour maintenir en place la valve circulaire (11) et l'anneau d'étanchéité (16).

Dans le raccord conforme à l'invention, le système d'étanchéité constitué par la valve (11) et l'anneau d'étanchéité (16) est disposé dans un logement ouvert prévu dans la partie haute de la paroi interne de l'élément tubulaire (5) ce qui facilite une pose correcte et un maintien en place correct et certain du système d'étanchéité par l'intermédiaire de la douille de fermeture.

La valve (11) et l'anneau d'étanchéité (16) sont de préférence réalisés à partir d'un élastomère tel qu'un caoutchouc synthétique qui présente une dureté, de préférence, de 50 à 70 IRHD et choisi de façon à satisfaire à la norme de qualité GIVEG NEN 7212.

Il est toutefois loisible de réaliser ces deux éléments à partir d'élastomères différents et présentant des duretés différentes. Dans ce cas, on préfère utiliser un élastomère ayant une dureté de 50 à 60 IRHD pour réaliser l'anneau d'étanchéité et un élastomère de dureté de 60 à 70 IRHD pour réaliser la valve.

A titre d'élastomères pouvant convenir, on peut citer notamment les caoutchoucs synthétiques à base d'acrylonitrile et de butadiène et les élastomères à base de polyuréthanes.

Lors de la réalisation de la valve (11), on peut avantageusement prévoir, dans la découpe circulaire partielle (13), le maintien de minces bandelettes locales (19) cassables qui empêchent tout déplacement de la partie centrale circulaire (14) durant le stockage et le transport du raccord. Ces bandelettes locales (19) ne sont brisées que lors de l'introduction de l'outil de perçage au moment de la mise en service du raccord. De cette façon, on est certain que la valve (11) reste fermée jusqu'au moment de la mise en service et que celle-ci peut alors fonctionner correctement. Cette garantie est particulièrement intéressante lorsque le raccord de dérivation est destiné à équiper des conduites de gaz domestique qui est distribué sous des pressions de 30 à 100 mbars.

La douille de fixation (18) a pour fonction non seulement d'assurer le maintien de la valve circulaire (11) et de l'anneau d'étanchéité (16), mais encore de garantir une bonne étanchéité.

La fixation de la douille de fixation (18) dans le logement ouvert (10) après mise en place successive de la valve (11) et de l'anneau d'étanchéité peut être assurée par tout moyen tel que le collage, le vissage, etc. Selon un mode de réalisation qui est préféré, on peut équiper la paroi externe de la douille de fixation (18) d'une ou plusieurs excroissances locales (20) qui peuvent s'encastrer dans des évidements correspondants prévus dans la paroi interne du logement ouvert (10) de façon à assurer un verrouillage en place de la douille de fixation (18).

Pour effectuer la mise en service du raccord conforme à l'invention, il suffit d'abord de fixer le raccord sur la tuyauterie à dériver et de raccorder la canalisation de raccordement puis, de retirer l'obturation amovible (6) et de procéder au perçage de la tuyauterie au moyen d'un outil de perçage approprié (21) et, enfin, après perçage et retrait de l'outil de perçage de remettre en place l'obturation amovible (6).

Lors de son introduction dans l'élément tubulaire (3), l'outil de perçage traverse l'ouverture centrale (17) de l'anneau d'étanchéité (16) qui, compte tenu du diamètre de son ouverture centrale inférieur à celui de l'outil et de la souplesse de son matériau constitutif, vient s'appliquer étroitement contre l'outil de perçage (21) et ainsi garantir une parfaite étanchéité contre toute fuite de fluide. L'outil de perçage (21) après avoir éventuellement assuré le bris des bandelettes (19) provoque ensuite l'ouverture de la valve (11) puis enfin pratique l'ouverture appropriée dans la paroi de la tuyauterie.

Après ouverture de la tuyauterie et durant le retait de l'outil de perçage (21), l'anneau d'étanchéité (16) garantit tout d'abord l'étanchéité souhaitée tandis que, en fin de retrait de l'outil de perçage, la partie centrale circulaire (14) de la valve (11), sous l'action de la pression du fluide, vient s'appliquer sur l'ouverture centrale (17) de l'anneau d'étanchéité (16) et ainsi empêcher toute fuite ultérieure de fluide. Après extraction complète de l'outil de perçage (21), il suffit alors de remettre en place l'obturation amovible (6).

Le système d'étanchéité tel que décrit permet également une obturation temporaire ultérieure de la tuyauterie, par exemple par soufflage d'un gaz via l'élément tubulaire (3), ou encore l'obturation de la canalisation de dérivation par introduction d'une broche de fermeture appropriée dans l'élément tubulaire (3) et ce, en empêchant une nouvelle fois toute fuite du fluide véhiculé par la tuyauterie.

## Revendications

1. Raccord de dérivation pour tuyauterie en matière thermoplastique comportant :
a) un élément en forme de selle (1) équipé de moyens (2) permettant sa fixation autour de la tuyauterie; et
b) un élément tubulaire de raccordement en T (3) dont une extrémité (4) d'une branche est raccordée à l'élément en forme de selle (1) et dont l'extémité opposée (5) est pourvue d'un moyen d'obturation étanche et amovible (6), l'extrémité de la branche latérale (7) de l'élément tubulaire étant pourvue de moyens (8) permettant son raccordement à une canalisation de dérivation,
dans lequel la branche de l'élément tubulaire (5) pourvue d'un moyen d'obturation étanche amovible (6) est équipée d'un système d'étanchéité (9) empêchant toute fuite du fluide véhiculé par la tuyauterie lors de la mise en service du raccord par perçage de ladite tuyauterie et dans lequel le système d'étanchéité (9) est incorporé dans un logement ouvert (10) prévu dans la paroi interne de l'extrémité de ladite branche et est constitué par :
- une valve circulaire souple (11) en un matériau élastomère dont le bord épaissi (12) est disposé dans ledit logement ouvert (10), ladite valve présentant une découpe circulaire partielle (13) le long de la majeure partie de sa périphérie, de façon à présenter une partie centrale circulaire (14) raccordée à la périphérie par un élément de liaison (15) agissant comme une charnière;
- un anneau d'étanchéité souple (16) appliqué sur la valve circulaire (11) ledit anneau étant également en un matériau élastomère, étant constitué par un disque circulaire présentant également un bord renforcé qui est disposé dans ledit logement ouvert (10) et comportant une ouverture circulaire centrale (17) de diamètre inférieur à celui de l'outil utilisé pour percer la tuyauterie; et
- une douille de fixation (18) pouvant être insérée et fixée dans ledit logement ouvert (10) pour maintenir en place la valve circulaire (11) et l'anneau d'étanchéité (16).

2. Raccord selon la revendication 1 caractérisé en ce que la valve (11) et l'anneau d'étanchéité (16) sont réalisés à partir d'un élastomère présentant une dureté de 50 à 70 IRHD.

3. Raccord selon la revendication 1 caractérisé en ce que la valve (11) et l'anneau d'étanchéité (16) sont realisés à partir d'élastomères différents, l'élastomère utilisé pour réaliser l'anneau d'étanchéité (16) ayant une dureté de 50 à 60 IRHD et l'élastomère utilisé pour réaliser la valve (11) ayant une dureté de 60 à 70 IRHD.

4. Raccord selon la revendication 1 caractérisé en ce que la valve (11) est équipée de minces bandelettes locales (19) cassables qui empêchent tout déplacement de la partie centrale circulaire (14) durant le stockage et le transport du raccord.

5. Raccord selon la revendication 1 caractérisé en ce que la paroi externe de la douille de fixation (18) est équipée d'une ou plusieurs excroissances locales (20) qui peuvent s'encastrer dans des évidements correspondants prévus dans la paroi interne du logement ouvert (10).

## Patentansprüche

1. Abzweiganschluß für eine Rohrleitung aus einem thermoplastischen Kunststoff, bestehend aus:
a) einem sattelförmigen Element (1), das mit Mitteln (2) versehen ist, die seine Befestigung um die Rohrleitung ermöglichen; und
b) einem rohrförmigen T-förmigen Anschlußelement (3), dessen eines Ende (4) eines Schenkels an das sattelförmige Element (1) angeschlossen ist, und dessen entgegengesetztes Ende (5) mit einer dichten und abnehmbaren Verschlußeinrichtung (6) versehen ist, wobei das Ende der seitlichen Abzweigung (7) des rohrförmigen Elements mit Einrichtungen (8) versehen sind, die seinen Anschluß an eine Abzweigleitung ermöglichen,
bei dem der Schenkel des rohrförmigen Elements (5), der mit einer abnehmbaren Verschlußeinrichtung (6) versehen ist, mit einer Dichtungsanordnung ausgestattet ist, die jeden Austritt des durch die Rohrleitung transportierten Fluids bei der Inbetriebnahme des Anschlusses durch Durchbohren der Rohrleitung verhindert, und bei dem die Dichtungsanordnung (9) in einen offenen Raum (10) eingesetzt ist, der in der Innenwand des Endes des Schenkels vorgesehen ist, und die besteht aus:
- einem kreisförmigen, flexiblen Ventil (11) aus einem elastomeren Material, dessen verdickter Rand (12) in dem offenen Raum (10) angeordnet ist, wobei das Ventil einen kreisförmigen partiellen Ausschnitt (13) längs des größeren Teils seines Umfanges aufweist, um einen zentralen kreisförmigen Abschnitt (14) zu haben, der an dem Umfang durch ein Verbindungselement (15) angeschlossen ist, das als Scharnier wirkt;
- einem flexiblen Dichtungsring (16), der auf das kreisförmige Ventil (11) aufgelegt ist, wobei der Ring, der ebenfalls aus einem elastomeren Material besteht, durch eine kreisförmige Scheibe gebildet ist, die auch einen verstärkten Rand, der in den offenen Raum (10) eingesetzt ist, und die eine kreisförmige zentrale Öffnung (17) mit einem Durchmesser, der geringer als der des Werkzeugs ist, das für das Durchbohren der Rohrleitung verwendet wird, aufweist; und
- einer Befestigungshülse (18), die in den offenen Raum (10) eingesetzt und darin befestigt werden kann, um das kreisförmige Ventil (11) und den Dichtungsring (16) zu halten.

2. Anschluß nach Anspruch 1,
**dadurch gekennzeichnet, daß** das
Ventil (11) und der Dichtungsring (16) aus einem Elastomer hergestellt sind, das eine Härte von 50 - 70 IRHD hat.

3. Anschluß nach Anspruch 1,
**dadurch gekennzeichnet, daß**
das Ventil (11) und der Dichtungsring (16) aus unterschiedlichen Elastomeren hergestellt sind, wobei das für die Herstellung des Dichtungsrings (16) verwendete Elastomer eine Härte von 50 - 70 IRHD und das für die Herstellung des Ventils (11) verwendete Elastomer eine Härte von 60 - 70 IRHD hat.

4. Anschluß nach Anspruch 1,
**dadurch gekennzeichnet, daß** das
Ventil (11) dünne örtliche, brechbare Ansätze (19) hat, die jede Verschiebung des zentralen kreisförmigen Abschnittes (14) während der Lagerung und des Transportes des Anschlusses verhindern.

5. Anschluß nach Anspruch 1,
**dadurch gekennzeichnet, daß**
die Außenwand der Befestigungshülse (18) mit einem oder mehreren örtlichen Vorsprüngen (20) versehen ist, die in entsprechende Ausnehmungen einrasten können, die in der Innenwand des offenen Raums (10) vorgesehen sind.

## Claims

1. A branch coupling for pipework made of thermoplastic material, comprising:
a) a saddle-shaped element (1) equipped with means (2) enabling it to be fixed around the pipework; and
b) a T-shaped connection element (3), one end (4) of one arm of which is connected to the saddle-shaped element (1), and the opposite end (5) of which is provided with an impervious, removable sealing means (6), the end of the side arm (7) of the tubular element being provided with means (8) permitting its connection to a branch pipe,
wherein the arm of the tubular element (5) which is provided with an impervious, removable sealing means (6) is fitted with a sealing system (9) which prevents any leakage of fluid conveyed by the pipework when the coupling is placed in operation by piercing the said pipework, and wherein the sealing system (9) is incorporated in an open seating (10) provided in the inside wall of the end of the said arm and consists of:
- a flexible circular valve (11) made of an elastomeric material, the thickened edge (12) of which is disposed in the said open seating (10), the said valve having a partial circular segment (13) along the major part of its periphery so as to comprise a central circular part (14) connected to the periphery by a connecting element (15) acting as a hinge;
- a flexible sealing ring (16) fitted to the circular valve (11), the said ring also being made of a flexible material and consisting of a circular disc which also has a reinforced edge which is disposed in the said open seating (10) and which comprises a central circular opening (17) of a diameter which is smaller than that of the tool used for piercing the pipework; and
- a fixing sleeve (18) which can be inserted and fixed in the said open seating (10) to keep the circular valve (11) and the sealing ring (16) in place.

2. A coupling according to claim 1, characterised in that the valve (11) and the sealing ring (16) are produced from an elastomer having a hardness of 50 to 70 IRHD.

3. A coupling according to claim 1, characterised in that the valve (11) and the sealing ring (16) are produced from different elastomers, the elastomer used to produce the sealing ring (16) having a hardness of 50 to 60 IRHD and the elastomer used to produce the valve (11) having a hardness of 60 to 70 IRHD.

4. A coupling according to claim 1, characterised in that the valve (11) is equipped with thin, local, breakable strips (19) which prevent any displacement of the central circular part (14) during the storage and transport of the coupling.

5. A coupling according to claim 1, characterised in that the outside wall of the fixing sleeve (18) is equipped with one or more local protuberances (20) which can engage in corresponding recesses provided in the inside wall of the open seating (10).
